Europäisches Patentamt

European Patent Office

Office européen des brevets

(11) Numéro de publication: **0 304 346**
**A2**

# (12) DEMANDE DE BREVET EUROPEEN

(21) Numéro de dépôt: **88401667.6**

(22) Date de dépôt: **29.06.88**

(51) Int. Cl.⁴: **F 16 L 37/08**

(30) Priorité: **12.08.87 FR 8711451**

(43) Date de publication de la demande:
**22.02.89 Bulletin 89/08**

(84) Etats contractants désignés:
**AT BE CH DE ES FR GB GR IT LI LU NL SE**

(71) Demandeur: **SOCIETE GIRPI**
**12-18, Avenue de la Jonchère B.P. No. 66**
**F-78170 La Celle-Saint-Cloud (FR)**

(72) Inventeur: **Baillon, Michel Société GIRPI**
**12/18 Avenue de la Jonchère B.P. No.66**
**F-78170 La Celle-Saint-Cloud (FR)**

(74) Mandataire: **Mongrédien, André et al**
**c/o SOCIETE DE PROTECTION DES INVENTIONS 25, rue de Ponthieu**
**F-75008 Paris (FR)**

(54) **Raccord instantané pour canalisation de fluide.**

(57) L'invention concerne un raccord instantané démontable, dont le corps tubulaire (1) est équipé d'au moins un joint d'étanchéité annulaire (5) et au moins une couronne d'accrochage unidirectionnelle (6), dans lesquels peut être introduite manuellement l'extrémité d'un tube (2), par exemple en matière synthétique, dont l'enlèvement est ensuite empêché par la couronne d'accrochage (6). Cette dernière est placée dans un logement (4) dont elle peut être extraite, après démontage d'un écrou (5). La séparation de la couronne (6) et du tube (2) s'effectue alors en écartant radialement la couronne du tube, ce qui est rendu possible grâce à une ou plusieurs discontinuités (12) formées sur la périphérie de cette couronne.

FIG. 3

EP 0 304 346 A2

Description

## Raccord instantané pour canalisation de fluide.

L'invention concerne un raccord instantané pour des canalisations de fluide formées par exemple de tubes souples en matière synthétique. Elle concerne plus particulièrement un raccord instantané dans lequel le ou les tubes peuvent être introduits longitudinalement par une action manuelle, sans que l'arrachement des tubes soit possible. L'invention trouve son application préférentielle dans le raccordement de tous types de tubes en matière synthétique pour le transport de fluides liquides ou gazeux avec ou sans pression.

Il existe déjà des dispositifs métalliques et/ou plastiques qui permettent le raccordement instantané de tubes souples dans un raccord. Ainsi, dans le document FR-A-2 302 475, il est décrit un raccord comportant un corps tubulaire qui présente au moins un logement dans lequel sont situés, d'une part, un organe d'étanchéité annulaire et, d'autre part, une couronne d'accrochage unidirectionnelle dont la structure permet l'emboîtement manuel du tube dans le logement tout en interdisant l'arrachement ultérieur de ce tube.

Le raccord décrit dans ce document FR-A-2 302 475 est simple et facile à mettre en oeuvre. Cependant, il a pour inconvénient de ne pas être démontable. Le tube ne peut donc être séparé du corps du raccord qu'en le coupant ou en introduisant un outil tel qu'un tournevis pour dégager la couronne d'accrochage du tube, ce qui conduit inévitablement à rendre le raccord inutilisable.

Une solution à ce problème, décrite notamment dans le document FR-A-2 385 024, consiste à équiper le raccord, en plus des organes déjà décrits, d'un poussoir dont l'actionnement a pour effet de dégager la couronne d'accrochage du tube et, par conséquent, de libérer ce dernier. Cependant, ce type de raccord a pour double inconvénient de compliquer notablement la structure du raccord et de présenter un risque de libération accidentelle du tube, puisque ce dernier est séparé du raccord dès qu'une pression, même involontaire, est exercée sur le poussoir.

Dans le document FR-A-2 591 309, l'organe d'étanchéité ainsi que la couronne d'accrochage sont indépendants du corps du raccord et maintenus en place à l'intérieur du logement par un écrou vissé sur un filetage formé sur le corps. En démontant cet écrou, il est possible d'extraire le tube portant l'organe d'étanchéité et la couronne d'accrochage. Cependant, il est pratiquement impossible de séparer cette dernière du tube sans la détériorer de façon irréversible ou sans couper les extrémités du tube.

Par ailleurs, dans le document CH-A-442 899, l'organe d'étanchéité ainsi que la couronne d'accrochage sont également indépendants du corps du raccord. De plus, la couronne d'accrochage peut être segmentée, notamment lorsque le diamètre du tube est important. Cependant, les formes du logement et de la couronne d'accrochage sont des formes complémentaires et complexes qui interdisent ici encore tout enlèvement du tube après sa mise en place.

L'invention a précisément pour objet un raccord instantané conçu pour remédier à ces différents inconvénients et notamment pour permettre un démontage du tube sans qu'il soit nécessaire de le raccourcir ou d'endommager la couronne d'accrochage, et sans que la structure du raccord en soit rendue plus complexe ou conduise à un risque de libération accidentelle du tube.

Selon l'invention, ce résultat est obtenu au moyen d'un raccord instantané pour canalisation de fluide, comprenant un corps tubulaire dans lequel sont montés au moins un organe d'étanchéité annulaire et au moins une couronne d'accrochage unidirectionnelle, de telle sorte qu'une extrémité d'un tube peut être introduite à l'intérieur de l'organe d'étanchéité et de la couronne d'accrochage et que cette dernière interdise ensuite l'enlèvement du tube, la couronne d'accrochage pouvant être introduite et extraite d'un logement formé dans le corps, après enlèvement d'un dispositif de retenue démontable fixé sur le corps tubulaire, caractérisé par le fait que la couronne d'accrochage comporte au moins une discontinuité circonférentielle permettant d'écarter radialement la couronne du tube lorsque ladite couronne est sortie du logement après démontage du dispositif de retenue, de sorte que le raccord peut être totalement démonté sans endommager le tube.

L'agencement original ainsi défini permet le démontage du raccord sans nécessiter une structure mécanique complexe ou l'utilisation d'un outil susceptible d'endommager le tube ou la couronne d'accrochage. En effet, après démontage du dispositif de retenue, le tube peut être extrait sans difficulté du logement correspondant en même temps que la couronne d'accrochage, qui est ensuite séparée sans difficulté du tube grâce à la présence d'au moins une discontinuité circonférentielle sur cette couronne.

Selon un premier mode de réalisation de l'invention, la couronne d'accrochage comporte une seule discontinuité circonférentielle et elle est réalisée en un matériau élastique permettant une augmentation de diamètre de la couronne lorsque cette dernière est sortie de son logement. Ce mode de réalisation présente l'avantage que la couronne d'accrochage est réalisée en une seule pièce et peut donc être mise en place et extraite sans difficulté.

Selon un deuxième mode de réalisation de l'invention, la couronne d'accrochage est formée d'au moins deux segments aptes à être séparés les uns des autres lorsque la couronne est sortie de son logement. Ce mode de réalisation facilite la fabrication de la couronne d'accrochage, notamment lorsque celle-ci comporte plusieurs séries de dents d'accrochage intérieures recourbées vers le fond du logement. En effet, on peut alors donner à ces dents des formes quelconques.

De préférence, la matière constitutive du corps du raccord est une matière plastique susceptible d'être moulée par injection telle que, par exemple, le polypropylène, le PVC, le polyacétal, le polyamide, l'ABS, le PVDS, ou tout matériau similaire chargé ou non.

Les couronnes d'accrochage peuvent être réalisées quant à elles en un matériau qui présente au niveau des dents une rigidité supérieure à celle du tube et une insensibilité aux agents agressifs véhiculés dans le raccord, comme le métal ou comme les matières plastiques préférentiellement moulables par injection et présentant un module d'élasticité supérieur à 20.000 kgf/cm$^2$, tel que par exemple un polyacétal.

Selon une réalisation préférentielle de l'invention, l'organe d'étanchéité est reçu dans une partie profonde de diamètre uniforme du logement, alors que la couronne d'accrochage est disposée dans une partie d'extrémité de ce dernier, dont le diamètre uniforme est supérieur au diamètre de la partie profonde. Le diamètre extérieur de la couronne d'accrochage est également uniforme et approximativement égal au diamètre de cette partie d'extrémité du logement, lorsque les bords adjacents de chaque discontinuité circonférentielle de la couronne sont en contact les uns des autres.

L'invention sera mieux comprise à l'aide de la description qui suit de deux modes de réalisation d'un raccord selon l'invention, donnés à titre d'illustration non limitative, en référence aux dessins annexés, dans lesquels :

- la figure 1 est une vue en coupe longitudinale représentant un raccord instantané permettant de raccorder les extrémités des deux tubes, avant introduction de ces tubes, le raccord étant représenté démonté sur la partie droite de la figure ;

- la figure 2 est une vue similaire à la figure 1 représentant le raccord après introduction d'un tube ;

- la figure 3 est une vue en plan représentant l'une des couronnes d'accrochage unidirectionnelles du raccord des figures 1 et 2, conformément à un premier mode de réalisation de l'invention dans lequel cette couronne est réalisée en une seule pièce ; et

- la figure 4 est une vue en plan comparable à la figure 3, représentant une couronne d'accrochage unidirectionnelle utilisée dans le raccord des figures 1 et 2 selon un deuxième mode de réalisation de l'invention dans lequel la couronne est formée de deux segments semi-circulaires, les parties gauche et droite de cette figure représentant respectivement les deux segments de la couronne d'accrochage écartées l'une de l'autre et juxtaposées.

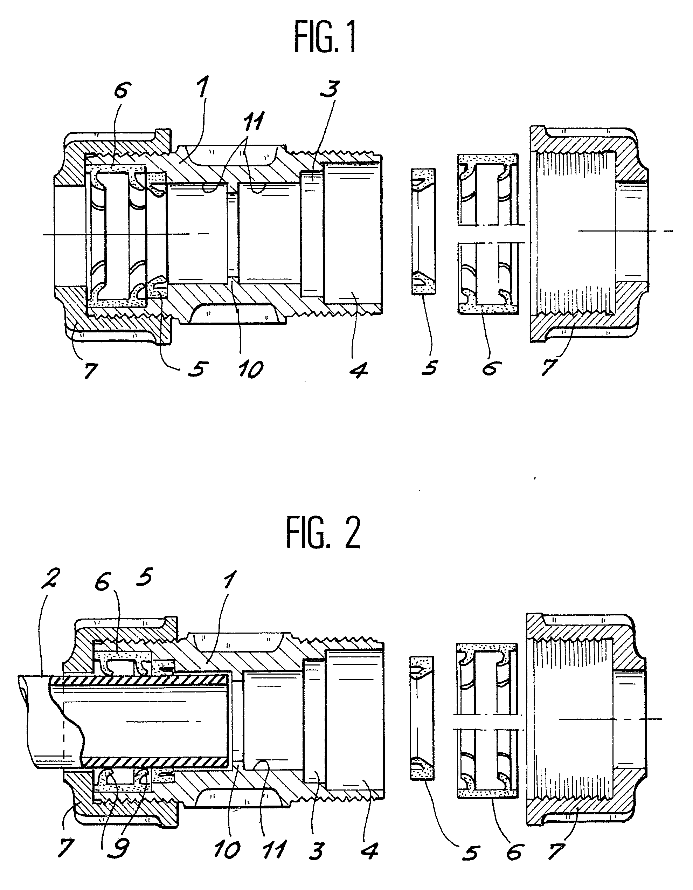

On a représenté sur les figures 1 et 2 un raccord instantané permettant de raccorder les extrémités de deux tubes 2, constitués par exemple par des tubes souples en matière synthétique. Ce raccord comprend un corps tubulaire 1 présentant un axe de symétrie longitudinal et un plan de symétrie radial par rapport à cet axe. Le corps tubulaire 1 est traversé par un alésage dont la partie centrale, de plus petit diamètre, constitue une butée annulaire 10 sur laquelle peuvent venir en appui les extrémités des tubes 2 à raccorder. De part et d'autre de cette butée centrale 10, l'alésage traversant le corps 1 comporte une partie 11, dont le diamètre uniforme est légèrement supérieur au diamètre extérieur des tubes 2 à raccorder, afin de permettre l'introduction de ces derniers dans le corps du raccord.

Dans ses parties les plus proches des extrémités du corps 1, l'alésage formé dans ce dernier présente une structure en gradin dont le diamètre augmente progressivement vers les extrémités de l'alésage. Ce dernier définit ainsi, au-delà des parties 11 dans lesquelles sont reçues les extrémités des tubes 2, des logements 3-4 comportant une partie profonde 3, dont le diamètre uniforme est supérieur à celui de la partie 11, et une partie d'extrémité 4, dont le diamètre uniforme est supérieur à celui de la partie 3.

Comme l'illustre notamment la figure 1, la partie profonde 3 de chacun des logements formés dans le corps 1 reçoit un joint d'étanchéité annulaire 5 en élastomère dont le diamètre extérieur est approximativement égal au diamètre intérieur de cette partie 3 et dont la longueur est approximativement égale à la longueur de cette partie 3 du logement correspondant. Dans le mode de réalisation représenté, chacun des joints 5 comporte une lèvre périphérique intérieure dont le diamètre intérieur est inférieur au diamètre extérieur du tube 2, de telle sorte que cette lèvre se déforme et comprime radialement l'ensemble du joint dans la partie 3 du logement lorsque le tube 2 est mis en place comme l'illustre la partie gauche de la figure 2. L'étanchéité du raccordement est ainsi réalisée.

La partie d'extrémité 4 de chacun des logements formés dans le corps 1 du raccord reçoit quant à elle une couronne d'accrochage 6, réalisée par exemple plus en détail ultérieurement. A ce stade de la description, on notera simplement que chaque couronne d'accrochage 6 présente une surface extérieure cylindrique dont le diamètre uniforme est approximativement égal au diamètre intérieur de la partie 4 des logements formés dans le corps 1 du raccord. De plus, la longueur de chaque couronne 6 est également approximativement égale à la longueur des parties 4 des logements.

Dans la structure qui vient d'être décrite, les joints d'étanchéité annulaires 5 ainsi que les couronnes d'accrochage 6 peuvent être introduits et extraits librement des parties correspondantes des logements formés dans le corps 1. Afin d'assurer leur maintien à l'intérieur de ces logements, le raccord comprend en outre deux écrous 7 vissés sur des filetages formés sur chacune des extrémités cylindriques du corps 1 du raccord.

Afin de remplir sa fonction qui consiste à permettre l'introduction manuelle du tube 2 tout en en interdisant ensuite l'enlèvement tant que l'écrou 7 n'est pas dévissé, chacune des couronnes d'accrochage 6 comporte au moins une série de dents d'accrochage intérieures 9 séparées entre elles par des fentes radiales et qui sont recourbées vers le fond du logement 3-4 lorsque la couronne est placée dans la partie 4 de ce logement. Lorsque la couronne est au repos, le diamètre intérieur de celle-ci délimité par les dents 9 est inférieur au diamètre extérieur du tube 2. Dans l'exemple de réalisation représenté sur les figures 1 et 2, chacune des couronnes 6 comprend deux séries de dents d'accrochage 9.

Grâce à ces caractéristiques, lors de l'introduction du tube 2 dans le raccord et comme représenté sur la figure 2, la paroi externe du tube vient incurver les dents d'accrochage 9 de la couronne correspondante, après avoir traversé l'écrou 7. Les dents d'accrochage 9 de chacune des couronnes 6 interdisent ainsi, par effet de harpon, toute extraction accidentelle du tube 2. Lorsque l'enfoncement du tube se poursuit, celui-ci vient déformer la lèvre annulaire du joint d'étanchéité 5 correspondant, avant de venir en appui par son extrémité contre la butée annulaire 10.

Conformément à l'invention, chacune des couronnes d'accrochage unidirectionnelles 6 est en outre réalisée de telle sorte qu'il soit possible de démonter complètement le raccord sans endommager le tube ni aucune des pièces constituant ce raccord.

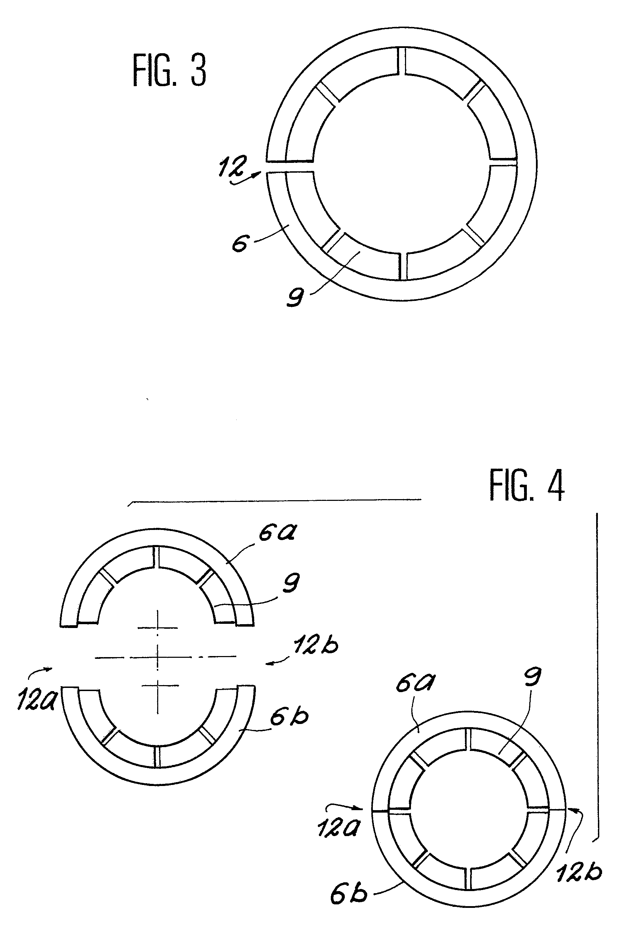

Selon un premier mode de réalisation illustré sur la figure 3, ce démontage est rendu possible par le fait que chacune des couronnes d'accrochage 6 comporte une discontinuité circonférentielle 12 constituée par une fente radiale traversant complètement la couronne d'accrochage. Cette fente radiale peut notamment coïncider avec l'une des fentes séparant les dents 9 de chacune des séries de dents de la couronne, cette fente étant alors prolongée radialement vers l'extérieur au travers de la partie extérieure de la couronne.

Dans ce premier mode de réalisation de l'invention, chacune des couronnes d'accrochage 6 est réalisée en un matériau qui présente, au niveau des dents 9, une rigidité supérieure à celle du tube, afin que les dents assurent correctement leur fonction de retenue, cette matière présentant toutefois une élasticité suffisante pour permettre d'écarter radialement la couronne du tube lorsque cette couronne est sortie de son logement. Ainsi, chacune des couronnes d'accrochage est réalisée dans le présent exemple en polyacétal à haut module d'élasticité, afin d'accroître les efforts de résistance à l'extraction accidentelle du tube. Toutefois, elle peut aussi être réalisée indifféremment en toute autre matière insensible à l'oxydation (matière synthétique, métal, etc.).

Afin que le fonctionnement du raccord soit satisfaisant, il est à noter que le diamètre extérieur de la couronne d'accrochage 6 doit être approximativement égal au diamètre intérieur de la partie 4 du logement prévu pour la recevoir dans le corps du raccord, lorsque les extrémités de cette couronne formée par la discontinuité 12 sont en contact l'une de l'autre.

Ainsi, après la mise en place du joint d'étanchéité 5 dans la partie 3 du logement formé dans le corps 1, la couronne d'accrochage 6 peut être introduite dans la partie 4 du logement et ces deux organes sont ensuite emprisonnés et maintenus en place par le vissage de l'écrou 7 correspondant, comme l'illustre la partie gauche de la figure 1. Dans ces conditions, la couronne d'accrochage 6 ne peut pas se déformer radialement vers l'extérieur, de sorte que, lorsque le tube 2 est introduit de la manière décrite précédemment, l'extraction de ce tube est empêchée par effet de harpon comme on l'a indiqué.

Lorsqu'on désire démonter le raccord, un simple dévissage de l'écrou 7 permet d'extraire le tube 2 du corps 1 avec sa couronne d'accrochage 6 et éventuellement avec son joint d'étanchéité annulaire 5. Le tube 2 est ensuite désolidarisé aisément de la couronne d'accrochage 6 par une simple déformation radiale vers l'extérieur de cette dernière. Etant donné que le joint d'étanchéité 5 est réalisé en un matériau élastomère, sa désolidarisation du tube 2 ne pose pas non plus de problème particulier. On réalise ainsi le démontage du raccord sans qu'aucune pièce ne soit endommagée.

Dans le mode de réalisation illustré sur la figure 2, au lieu d'être réalisée en une seule pièce, la couronne d'accrochage unidirectionnelle 6 est formée de deux segments ou demi-couronnes semi-circulaires 6a et 6b qui sont donc séparés par deux discontinuités circonférentielles 12a et 12b diamétralement opposées.

Comme dans le premier mode de réalisation, lorsque les extrémités adjacentes de chacun des segments ou demi-couronnes 6a et 6b de la couronne d'accrochage 6 sont en contact les unes des autres, le diamètre extérieur de la couronne ainsi formée est approximativement égal au diamètre intérieur de la partie 4 du logement prévue pour recevoir cette couronne dans le corps 1 du raccord. La fonction d'accrochage unidirectionnelle du tube 2 correspondant est ainsi assurée.

Le matériau constituant chacun des segments 6a et 6b de la couronne d'accrochage 6 peut être quelconque puisqu'il n'est pas nécessaire de déformer cette couronne pour séparer chacun des segments du tube lorsque celui-ci est extrait de son logement après démontage de l'écrou 7. Toutefois, les dents 9 sont réalisées en un matériau insensible à l'oxydation et présentant une rigidité supérieure à celle du tube 2. C'est ainsi que, dans le présent exemple, elles sont réalisées préférentiellement en polyacétal à haut module d'élasticité pour accroître les efforts de résistance à l'extraction accidentelle du tube.

Bien entendu, l'invention n'est nullement limitée aux modes de réalisation précédemment décrits, mais en couvre toutes les variantes. Ainsi, le nombre et la forme des couronnes d'accrochage et des joints d'étanchéité utilisés peuvent être quelconques. Le raccord peut aussi présenter toutes les formes habituelles dans le domaine des canalisations de fluide et notamment en T, en forme de manchon, de coude, de croix, etc.. Dans le deuxième mode de réalisation décrit, on notera également que le nombre des segments formant la couronne d'accrochage peut être supérieur à deux. En outre, dans un mode de réalisation intermédiaire, la couronne peut être réalisée en plusieurs segments reliés entre eux par des charnières déformables, de telle sorte que la couronne présente une seule discontinuité circonférentielle. Les différents segments formant la couronne sont alors pratiquement indéformables et l'écartement radiale de la couronne permettant de la démonter du tube est réalisé par déformation des charnières.

## Revendications

1. Raccord instantané pour canalisation de fluide, comprenant un corps tubulaire (1) dans lequel sont montés au moins un organe d'étanchéité annulaire (5) et au moins une couronne d'accrochage unidirectionnelle (6), de telle sorte qu'une extrémité d'un tube (2) peut être introduite à l'intérieur de l'organe d'étanchéité (5) et de la couronne d'accrochage (6) et que cette dernière interdise ensuite l'enlèvement du tube (2), la couronne d'accrochage (6) pouvant être introduite et extraite d'un logement (4) formé dans le corps (1), après enlèvement d'un dispositif de retenue démontable (7) fixé sur le corps tubulaire, caractérisé par le fait que la couronne d'accrochage (6) comporte au moins une discontinuité circonférentielle (12,12a,12b) permettant d'écarter radialement la couronne du tube (2) lorsque ladite couronne est sortie du logement (4) après démontage du dispositif de retenue, de sorte que le raccord peut être totalement démonté sans endommager le tube.

2. Raccord selon la revendication 1, caractérisé par le fait que la couronne d'accrochage (6) comporte une seule discontinuité circonférentielle (12) et est réalisée en un matériau élastique permettant une augmentation de diamètre de la couronne lorsque cette dernière est sortie de son logement (4).

3. Raccord selon la revendication 1, caractérisé par le fait que la couronne d'accrochage (6) est formée d'au moins deux segments (6a,6b) aptes à être séparés les uns des autres lorsque la couronne est sortie de son logement (4).

4. Raccord selon l'une quelconque des revendications 1 à 3, caractérisé par le fait que la couronne d'accrochage (6) comporte au moins une série de dents d'accrochage intérieures (9) recourbées vers le fond du logement (4), réalisées en un matériau insensible à l'oxydation et présentant une rigidité supérieure à celle du tube (2), afin de retenir ce dernier par effet de harpon.

5. Raccord selon l'une quelconque des revendications 1 à 4, caractérisé par le fait que le logement comprend une partie profonde (3) de diamètre uniforme, apte à recevoir l'organe d'étanchéité (5), et une partie d'extrémité (4), de diamètre uniforme supérieur au diamètre de la partie profonde, apte à recevoir la couronne d'accrochage (6), le diamètre extérieur de cette dernière étant uniforme et approximativement égal au diamètre de cette partie d'extrémité du logement, lorsque les bords adjacents de chaque discontinuité circonférentielle de la couronne sont en contact les uns des autres.

6. Raccord selon l'une quelconque des revendications 1 à 5, caractérisé par le fait que le dispositif de retenue est un écrou (7) apte à être vissé sur un filetage formé sur le corps (1) du raccord.

# FIG. 1

# FIG. 2

FIG. 3

FIG. 4